# EUROPÄISCHE PATENTANMELDUNG

(11) **EP 0 985 463 A2**
(43) Veröffentlichungstag der Anmeldung: **15.03.2000**
(21) Anmeldenummer: 99116549.9
(22) Anmeldetag: 24.08.1999
(51) Int. Cl.: B21C 37/083

(54) **Vorrichtung zum Herstellen eines Metallbandes mit abgewinkelten Längsrändern**

(30) Priorität: 11.09.1998 DE 19841603
(71) Anmelder: Hewing GmbH, D-48607 Ochtrup (DE)
(72) Erfinder: Riesselmann, Franz-Josef, 49393 Lohne (DE); Freermann, Reinhold, 48607 Ochtrup (DE)
(74) Vertreter: Hilleringmann, Jochen, Dipl.-Ing.

(57) **Zusammenfassung**

Eine Vorrichtung zur Herstellung eines Metallbandes mit abgewinkelten Längsrändern mit einer Formstation (60) mit einem Paar ineinandergreifender Formrollen (64,62) zur Formung jeweils eines L-förmigen Flansches (70) an den Längsrändern des Metallbandes (56) und einer Besäumungsstation (66) zum Abtrennen eines Randabschnittes (74) des an den Längsseiten gebildeten Flansches (70) des Metallbandes (56) weist zur Vermeidung von Abweichungen des Metallbandes in Querrichtung eine Führungsvorrichtung (64) zum Führen des Metallbandes (56) zwischen der Formstation (60) und der Besäumungsstation (66) auf einer gekrümmten Bahn auf.

## Beschreibung

Die Erfindung betrifft eine Vorrichtung zum Herstellen eines Metallbandes mit abgewinkelten Längsrändern.

Eine solches Metallband wird unter anderem zum Ummanteln eines Kunststoffrohres mit einer Metallummantelung verwendet. In der WO 96/34708 ist ein solches Verfahren und die hierbei verwendete Vorrichtung beschrieben. Aus einem flachen ebenen Metallband, das auf einem Wickel aufgewickelt ist, wird ein Metallband mit abgewinkelten Längsrändern geformt, indem das Metallband zunächst durch eine Rollenformstation mit einem Paar ineinandergreifender Formrollen und anschließend durch eine Besäumungsstation geführt wird. In der Rollenformstation werden an den Längsrändern des Bandes stufenförmige Absätze geformt, die hier als L-förmiger Flansch bezeichnet werden. Das durch Drücken geformte Metallband wird einer Besäumungsstation zugeführt, in der an Schneidkanten von beidseitig des Metallbandes anliegenden Rollen die Randabschnitte der L-förmigen Flansche abgetrennt werden.

In der Praxis hat sich die Herstellung eines Metallbandes mit abgewinkelten Längsrändern mit geringen Fertigungstoleranzen als nicht gänzlich unproblematisch erwiesen. Bewegungen des Bandes in Querrichtung sind insbesondere zwischen der Formstation und der Besäumungsstation jedoch äußerst nachteilig, da es zu Abweichungen in der Form des hergestellten Längsrandes kommt.

Es ist daher Aufgabe der Erfindung, eine Vorrichtung der genannten Art dahingehend zu verbessern, daß das Metallband sich in der Formstation und der Besäumungsstation stets in definierter Lage befindet.

Dies wird erfindungsgemäß dadurch erreicht, daß eine Führungsvorrichtung zum Führen des Metallbandes zwischen der Formstation und der Besäumungsstation auf einer gekrümmten Bahn vorgesehen ist.

Eine solche Führungsvorrichtung führt das Metallband auf dem Weg zwischen der Formstation und der Besäumungsstation. Besonders vorteilhaft ist es hierbei, daß das Band auf diesem Weg auf einer gekrümmten Bahn geführt wird. Hierdurch wird die Führung bedeutend erleichtert, denn auf einer gekrümmten Bahn hat das Metallband weniger Bestreben, in seiner Querrichtung von der gewünschten Bahn abzuweichen. Insbesondere nach Ausformung eines L-förmigen Flansches an den Längsrändern des Metallbandes in der Formstation bietet die Führung des Metallbandes auf einer gekrümmten Bahn eine besondere Stabilität.

Unter einem L-förmigen Flansch an den Längsrändern des Metallbandes wird hier verstanden, daß die Ränder des Metallbandes gegenüber dessen mittlerem Bereich (höhen-)versetzt angeordnet sind, wobei der Übergang stufenförmig ist. Die Querschnittsform des Metallbandes am Rand könnte auch als Z-Form beschrieben werden. Üblicherweise werden die stufigen Übergängen einen Winkel von ca. 90° aufweisen. Es kann jedoch auch vorgesehen sein, daß größere bzw. kleinere Winkel gebildet werden.

Die Führungsvorrichtung kann beispielsweise durch an das Metallband angepreßte Rollen realisiert werden.

Möglich sind hier z.B. Rollenpaare, die einander gegenüberliegend an die Ober- bzw. Unterseite des Metallbandes angepreßt werden. Für die Führung des Metallbandes in Querrichtung können diese Rollen Führungskanten aufweisen, die mit dem L-förmigen Flansch in Eingriff stehen.

Nach einer Weiterbildung der Erfindung weist die Führungsvorrichtung mindestens ein Führungselement auf. Bei einem solchen Führungselement kann es sich beispielsweise um eine Gleitfläche handeln, vorzugsweise werden hier Führungsrollen verwendet. Das Führungselement weist eine mittlere Kontaktfläche zur Anlage an den mittleren, zwischen den L-förmigen Flanschen gebildeten Bereich des Metallbandes auf. Ein solches Führungselement liegt so an der Ober- bzw. Unterseite des Metallbandes an. Eine besonders gute Führung ergibt sich, wenn die Breite der Kontaktfläche der Breite des mittleren Bereichs angepaßt ist. Vorzugsweise ist das Führungselement von etwa derselben Breite wie der mittlere Bereich des Metallbandes. Wenn das Führungselement auf der Seite des Metallbandes angeordnet ist, zu der hin die L-förmigen Flansche ausgeformt sind, liegt somit das Führungselement zwischen den durch diese Flansche gebildeten Stufen. Hierdurch ergibt sich eine besonders gute Führung des Metallbandes in Querrichtung.

Nach einer Weiterbildung der Erfindung ist die Formstation so ausgestaltet, daß sie eine erste Formrolle und eine zweite Formrolle aufweist, zwischen denen das Metallband geformt wird. Bei der ersten Formrolle ist der Umfang des Mittelbereichs der Rolle größer als der Umfang der Randbereiche und zwischen dem Mittelbereich und den Randbereichen ist jeweils eine Stufe gebildet. Die hierzu passende zweite Formrolle ist so gestaltet, daß sie mit der ersten Formrolle in Eingriff steht, d.h. bei der zweiten Formrolle weisen die Randbereiche einen größeren Umfang als der Mittelbereich auf, wobei der Übergang ebenfalls stufig ausgebildet ist.

Die Breite der Randbereiche der beiden Formrollen kann sehr klein gegenüber der Breite des Mittelbereichs gewählt sein. In der Regel wird die Breite der Randbereiche mindestens der Materialstärke des Metallbandes entsprechen.

In der Formstation sind die ersten und die zweiten Formrollen dicht nebeneinander angeordnet. Das zwischen den Rollen geführte, anfangs ebene Metallband liegt mit der Ober- und Unterseite an den Umfangsflächen der Formrollen an und wird durch diese verformt. Während der Mittelbereich des Metallbandes zwischen den mittleren Bereichen der Formrollen festgehalten wird, drücken die vorstehenden Randbereiche der zweiten Formrolle gegen die Randbereiche des Metallbandes und verbiegen diese gegenüber dem Mittelbereich. Die Randbereiche der ersten Formrolle drücken hierbei von der gegenüberliegenden Seite gegen die Randbereiche des Metallbandes und unterstützen diese, so daß es zur Ausbildung eines L-förmigen Flansches kommt.

Die zwischen den Randbereichen und dem Mittelbereich gebildeten Stufen können als 90°-Stufen ausgebildet sein. Um die Ausformung einer möglichst exakten 90°-Stufe entlang der Ränder des Metallbandes zu erreichen, kann es auch vorgesehen sein, daß die seitlichen Flächen der Stufen der ersten Formrolle Hinterschnitte bildende Aussparungen aufweisen.

Einer wesentlichen Weiterbildung der Erfindung zur Folge ist das Führungselement als eine Führungsrolle ausgebildet. Um eine durchgängige Führung des Metallbandes zwischen der Formstation und der Besäumungsstation zu erzielen, wird hierfür eine Führungsrolle von relativ großem Durchmesser verwendet, wobei die gekrümmte Bahn, auf der das Metallband geführt wird, im wesentlichen der Umfangsfläche der Führungsrolle entspricht. So hat das Metallband zwischen den Stationen stets Kontakt mit der Führungsrolle, die auf der Innenseite seiner gekrümmten Bahn angeordnet ist. Ergänzend hierzu kann auf der Außenseite eine oder mehrere Gegenrollen vorgesehen sein, um das Metallband an die Führungsrolle anzudrücken.

Gemäß einer anderen Weiterbildung der Erfindung ist die Führungsrolle gleichzeitig eine der beiden Formrollen der Formstation und eine der beiden Rollen der Besäumungsstation. Bei dieser Ausgestaltung werden die Stationen zusammen mit der Führungsvorrichtung zu einer Einheit zusammengefaßt. Das Metallband wird während der gesamten Bearbeitung auf der Führungsrolle, die einen relativ großen Durchmesser aufweist, geführt. Die Umfangsfläche der Führungsrolle ist hierbei so ausgestaltet, daß die Führungsrolle sowohl als eine der Rollen der Formstation als auch als eine der Rollen der Besäumungsstation verwendet wird. Form- und Besäumungsstation bestehen dementsprechend lediglich aus den verbleibenden Rollen.

Bei einer weiteren vorteilhaften Ausgestaltung der Erfindung ist die Führungsrolle als erste Station der Formstation ausgebildet und wirkt gleichzeitig als Gegenrolle der Besäumungsstation. Die Formstation wird demnach durch die zweite Rolle gebildet, bei der die Randbereiche einen größeren Umfang als der Mittelbereich aufweisen und die an die Führungsrolle angedrückt wird. Die Besäumungsstation ist entsprechend in dem Bereich der Führungsrolle gegen die die Besäumungsrolle mit Schneidkanten gegen die Führungsrolle drückt, angeordnet.

Vorzugsweise ist hierbei die Führungsrolle so ausgebildet, daß sie auf ihrer Umfangsfläche einen mittleren Bereich von größerem Umfang als die Randbereiche aufweist, wobei Stufen zwischen den Randbereichen und dem Mittelbereich gebildet sind. Eine Führungsrolle mit einer solchen Umfangsfläche ist für die Bildung der Formstation geeignet, wobei die oben beschriebene zweite Rolle der Formstation mit der Führungsrolle in Eingriff steht. Gleichzeitig ist eine Führungsrolle mit der genannten Umfangsfläche auch als Gegenrolle der Besäumungsstation geeignet.

Hierfür können die zurückgesetzten Randbereiche der Führungsrolle als Halteelemente für die Schneidkanten dienen, die gegen das Metallband gepreßt werden und auf den Randbereichen der Führungsrolle abrollen. Nach einer besonders vorteilhaften Weiterbildung der Erfindung ist jedoch vorgesehen, daß die Umfangsfläche der Führungsrolle eine umlaufende Einkerbung aufweist, in die die Schneidkanten der Besäumungsrolle eingreifen können. Die Einkerbung befindet sich vorzugsweise in Verlängerung der Stufe zwischen dem mittleren Bereich und dem Randbereich, so daß die Besäumungsrolle exakt den Randabschnitt des L-förmigen Flansches abtrennt.

Nach einer Weiterbildung der Erfindung ist ferner vorgesehen, daß eine Andrückstation hinter der Besäumungsstation angeordnet ist. Eine solche Andrückstation dient zum Andrücken des abgewinkelten Längsrandes an eine Haltefläche. Dies ist besonders vorteilhaft zum Erreichen eines möglichst exakt im Winkel von 90° abgewinkelten Längsrandes. Durch die Bearbeitung in der Besäumungsstation und durch die Führung des Metallbandes auf einer gekrümmten Bahn kann es zu Verformungen der Randbereiche kommen. Mit Hilfe einer Andrückstation kann wieder eine definierte Lage des Längsrandes erreicht werden.

Nach einer anderen Weiterbildung der Erfindung ist eine solche Andrückstation an einem solchen Punkt der Bahn des in der Führungsvorrichtung geförderten Metallbandes angeordnet, daß das Metallband hinter der Andrückstation gerade geführt wird. Das Metallband wird insgesamt von einem Wickel abgewickelt und zunächst gerade bis zur Formstation geführt. Zwischen der Formstation und der Besäumungsstation wird es durch die Führungsvorrichtung auf einer gekrümmten Bahn geführt. Die Andrückstation ist nun an der Stelle angeordnet, ab der das Metallband zur weiteren Verarbeitung die gekrümmte Bahn verläßt und wieder gerade geführt wird.

Eine mögliche Ausgestaltung einer solchen Andrückstation weist seitliche Andrückrollen und eine Halterolle mit seitlichen Halteflächen auf, neben denen die Andrückrollen angeordnet sind. Besonders vorteilhaft ist es hierbei, wenn die Andrückrollen um Achsen drehbar sind, die im wesentlichen senkrecht auf der Ebene des Metallbandes stehen. Solche Andrückrollen, die auch als Kegelrollen ausgebildet sein können, drücken seitlich gegen die abgewinkelten Randflächen. Zusammen mit einer innen angeordneten Halterolle wird so eine definierte Lage des abgewinkelten Randes erzielt.

Eine besonders einfache Ausgestaltung ergibt sich, wenn die Führungsrolle als Halterolle dient und die seitlichen Halteflächen die Seitenflächen der in der Umfangsfläche der Führungsrolle ausgebildeten Stufen sind. So kann eine Führungsrolle von großem Durchmesser als durchgehendes Führungselement zwischen der Formstation, der Besäumungsstation und der Andrückstation verwendet werden.

Nachfolgend wird ein Ausführungsbeispiel der Erfindung anhand der Zeichnungen näher beschrieben. In den Zeichnungen zeigen:
- Fig. 1: eine schematische Ansicht einer Anlage zur Herstellung eines Mehrschichtverbundrohres,
- Fig. 2: eine Querschnittsansicht des Metallbandes und der Rollen der Formstation in der Ebene II-II in Fig. 1,
- Fig. 3: eine Querschnittsansicht des Metallbandes und der Rollen der Besäumungsstation in der Ebene III-III in Fig. 1,
- Fig. 4: eine Querschnittsansicht des Metallbandes und der Rollen der Andrückstation in der Ebene IV-IV in Fig. 1 und
- Fign. 5 bis 7: Querschnittsansichten des Metallbandes in Höhe der Ebenen V-V, VI-VI und VII-VII in Fig. 1.

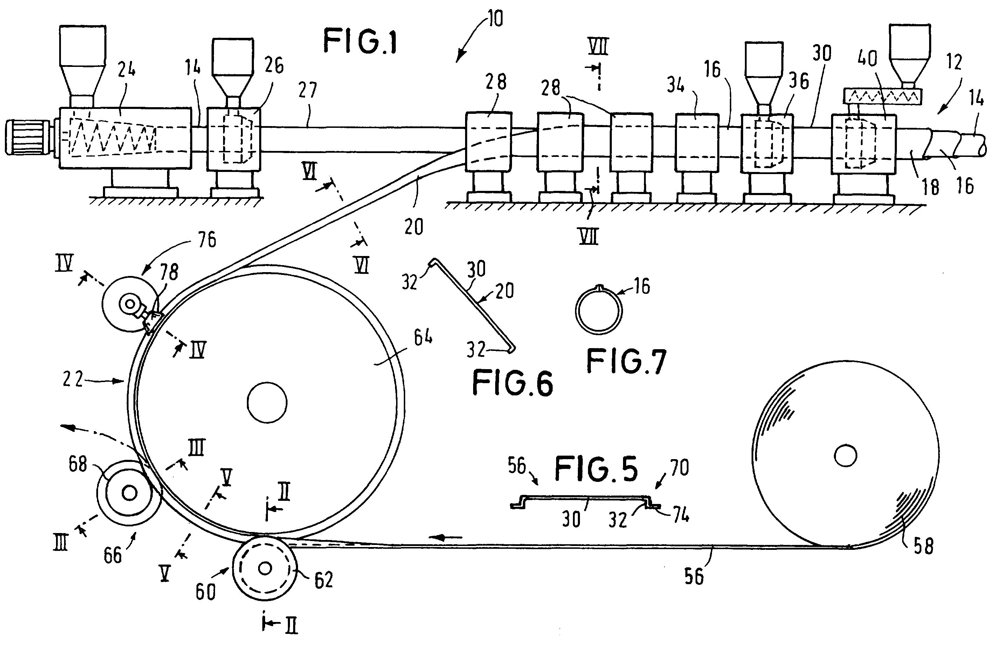

In Fig. 1 ist stark schematisiert eine Anlage 10 zur Herstellung eines Mehrschichtverbundrohres 12 dargestellt, welches ein Kunststoff-Innenrohr 14, eine Metallummantelung 16 für das Kunststoff-Innenrohr 14 und ein außen auf der Metallummantelung 16 aufgebrachtes Außenkunststoffrohr 18 aufweist. Für die Metallummantelung 16 wird ein Metallband 20 verwendet, das in einer Formungs- und Besäumungsvorrichtung 22 mit abstehenden Längsrändern versehen wird.

Bei der Anlage 10 wird in an sich bekannter Weise zur Herstellung des Verbundrohres 12 wie folgt verfahren. Zunächst wird mittels eines Extruders 24 das Kunststoff-Innenrohr 14 extrudiert. Auf dieses Innenrohr 14 wird mittels eines weiteren Extruders 26 von außen eine Kunststoffschicht als Haftvermittler 27 aufgetragen. Von der Seite, von unten oder von oben wird hinter dem Extruder 26 das (Aluminium-)Metallband 20 zugeführt, das mittels Rollenformstationen 28 von außen um das Innenrohr 14 herumgelegt wird. Die Geschwindigkeit, mit der das Metallband 20 zugeführt wird, ist synchron zur Geschwindigkeit gewählt, mit der das Innenrohr 14 extrudiert wird. Wie anhand von Fig. 6 zu erkennen ist, weist das Metallband 20 einen Mittelabschnitt 30 auf, an dessen beiden Längsseiten abstehende Längsränder 32 angeordnet sind. Mittels der Rollenformstationen 28 wird dieses Metallband 20 in Anlage mit dem Innenrohr 14 gebracht und derart um dieses herumgelegt, daß die etwa 90° abstehenden Längsränder 32 in Anlage miteinander gebracht werden. Die derart aneinanderliegenden Längsränder 32 stehen im wesentlichen radial vom Innenrohr 14 ab und werden in einer Schweißstation 34 miteinander verschweißt.

Im Anschluß an die Längsnahtverschweißung (die einander berührenden Längsränder 32 des Metallbandes 20 verlaufen in axialer Erstreckung des Innenrohres 14 bzw. des Verbundrohres 12) wird von außen auf die Metallummantelung 16 mittels eines Extruders 36 eine weitere Kunststoffschicht als Haftvermittler 38 aufgebracht. Mit Hilfe eines weiteren Extruders 40 wird dann auf die Haftvermittlerschicht 38 die Kunststoffschicht für das Kunststoff-Außenrohr 18 aufextrudiert. Durch an sich bekannte Maßnahmen werden die Haftvermittlerschichten 27 und 38 aktiviert bzw. die Kunststoffschichten für die Außen- und Innenrohr 18,14 vernetzt. Hierauf soll an dieser Stelle nicht näher eingegangen werden.

Nachfolgend soll auf das Verfahren zur Herstellung eines Metallbandes 20 mit abgewinkelten Längsrändern eingegangen werden. Dieses Metallband 20 wird ausgehend von einem flachen ebenen breiteren Metallband 56 geformt, das auf einem Wickel 58 aufgewickelt ist.

Die Formungs- und Besäumungsvorrichtung 22 weist eine zentrale Führungsrolle 64 auf. Das Metallband 56 wird der Formungs- und Besäumungsvorrichtung 22 gerade zugeführt. An der Führungsrolle 64 ist eine Rollenformstation 60 gebildet, in der das Metallband 56 zwischen der Führungsrolle 64 und einer daran angedrückten Formrolle 62 so verformt wird, daß sich ein L-förmiger Flansch 70 (s. Fig. 5) ausbildet.

Die Querschnittsform des Metallbandes 56 nach der Bearbeitung durch die Rollenformstation 60 ist in Fig. 5 dargestellt. Es weist einen erhöhten Mittelbereich 30 auf, an dessen Rändern L-förmige Flansche 70 gebildet sind. Die L-förmigen Flansche 70 sind als stufenförmige Verformungen ausgebildet, bei denen an dem mittleren Bereich 30 zunächst ein senkrecht hierzu verlaufender Rand 32 gebildet ist und an diesen wiederum ein hierzu etwa rechtwinklig angeordneter Randbereich 74 anschließt.

Das solchermaßen verformte Band 56 wird nach dem Durchlaufen der Rollenformstation 60 entlang der Führungsrolle 64 bis zu einer Besäumungsstation 66 geführt. Die Umfangsfläche der Führungsrolle 64 liegt hierbei innen an dem Band 56 an. Die senkrechten Ränder 32 weisen nach innen, so daß sie an der Führungsrolle 64 seitlich anliegen und das Metallband 56 somit eine gute Seitenführung erhält.

In der Rollenformstation 66 ist eine Besäumungsrolle 68 gegen die Führungsrolle 64 gedrückt. Das Metallband 56 wird zwischen der Besäumungsrolle 68 und der Führungsrolle 64 durchgeführt, wobei die Randabschnitte 74 der L-förmigen Flansche abgetrennt werden. Die so erzielte Querschnittsform des Metallbandes 20 ist in Fig. 6 dargestellt.

Nach einer weiteren Führung entlang der Umfangsfläche der Führungsrolle 64 erreicht das Metallband 20 eine Andrückstation 76, an der Andrückrollen 78 seitlich gegen die Randbereiche 32 des Metallbandes 20 gedrückt werden. Durch die Andrückstation 76 werden eventuelle Verformungen der senkrechten Randabschnitte 32 korrigiert und diese möglichst exakt senkrecht ausgerichtet. Wenn keine solche Verformungseffekte auftreten, kann die Andrückstation 76 auch weggelassen werden.

Hinter der Andrückstation 76 verläßt das Metallband 20 die Führungsrolle 64 und verläuft in gerade Linie zur Rollenformstation 28, wo es wie oben beschrieben weiterverarbeitet wird.

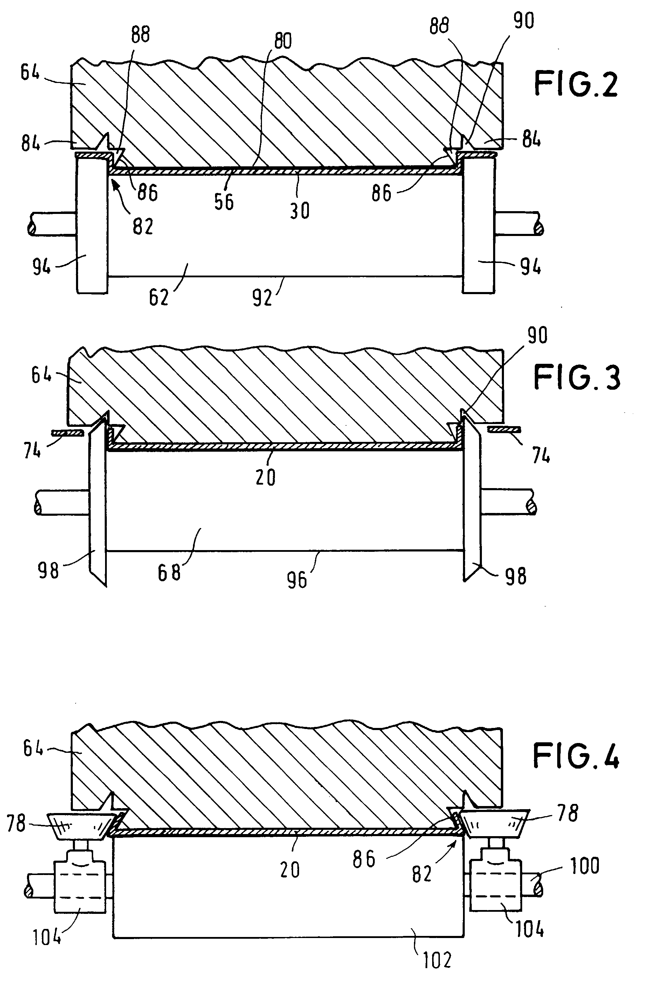

Nachfolgend soll anhand der Fign. 2 bis 4 die Gestaltung der Führungsrolle 64 und der in den Stationen 60, 66,76 verwendeten Rollen 62,68,78 beschrieben werden.

Die Führungsrolle 64, die in den Fign. 2 bis 4 jeweils im Querschnitt dargestellt ist, weist einen mittleren, erhöhten Bereich 80 auf, der sich über den größten Teil der axialen Länge der Umfangsfläche der Führungsrolle 64 erstreckt. An den Rändern des mittleren Bereiches 80 sind Stufen 82 gebildet, an denen Randbereiche 84 der Führungsrolle 64 anschließen, an denen diese einen geringeren Umfang aufweist als im mittleren Bereich 80.

Die an den mittleren Bereich 80 im Bereich der Stufen 82 anschließenden Seitenflächen 86 verlaufen nicht senkrecht zur Oberfläche des mittleren Bereichs 80 sondern bilden Aussparungen 88. Die Randbereiche 84 der Führungsrolle 64 weisen im Bereich der Stufe 82 eine ringförmige Einkerbung 90 auf.

Nach der Bearbeitung des Bandes 56 in der Formstation 60 wird das Band 56 entlang der Umfangsfläche der Führungsrolle 64 geführt, wobei sein mittlerer Bereich 30 am mittleren Bereich 80 der Führungsrolle 64 anliegt. Gleichzeitig liegen die senkrechten Ränder 32 seitlich an den Seitenflächen 86 der Stufen 82 in der Umfangsfläche der Führungsrolle 64 an (im Fall der nach innen geneigten Seitenflächen 86 liegen die Ränder 32 wenigstens an der Kante der Stufe 82 an). So ergibt sich eine außerordentlich sichere Führung des Metallbandes 56. Um Verformungen des L-förmigen Flansches 70 zu minimieren, ist die Führungsrolle 64 von großem Durchmesser.

In Fig. 2 ist eine Schnittansicht der Formstation 60 dargestellt. Das Metallband 56 wird zwischen der Führungsrolle 64 und der Formrolle 62 geführt und entsprechend deren Umfangsflächen verformt. Die Formrolle 62 weist einen mittleren Bereich 92 und erhöhte Randbereiche 94 auf. Der mittleren Bereich 92 entspricht in seiner axialen Länge etwa der Breite des mittleren Bereichs 80 der Führungsrolle 64 zuzüglich der doppelten Materialstärke des Metallbandes 56. Durch die unter Druck gegeneinander abrollenden Rollen 64,62 wird das Metallband 56 so verformt, daß sich L-förmige Flansche 70 an seinen Rändern bilden. Durch die Hinterschnitte bildenden Aussparungen 90 in den Seitenflächen 86 wird ein Winkel von 90° zwischen dem mittleren Bereich 30 des Metallbandes 56 und den Randbereichen 32 erzielt (Fig. 5). Ohne die Aussparungen 90 könnte es in den Stufen 82 zu einem Materialstau kommen, der die Ausformung eines 90°-Randbereiches 32 verhindert.

In der in Fig. 3 dargestellten Besäumungsstation werden die Randabschnitte 74 der L-förmigen Flansche 70 des Metallbandes 56 abgetrennt. Das Metallband 56 verläuft zwischen den gegeneinander abrollenden Rollen 64,68, wobei der mittlere Bereich 30 des Metallbandes 56 zwischen dem mittleren Bereich 80 der Führungsrolle 64 und einem mittleren Bereich 96 der Besäumungsrolle 68 geführt wird. Die Besäumungsrolle 68 weist an ihren Rändern Schneidkanten 98 auf. Die Besäumungsrolle 68 steht hierbei mit der Führungsrolle 64 so in Eingriff, daß die Schneidkanten 98 in die ringförmigen Einkerbungen 90 eingreifen. Somit wirkt die Führungsrolle 64 als Gegenrolle für die Besäumungsrolle 68, so daß das Band 56 so gehalten wird, daß von den L-förmigen Flanschen 70 an seinen Rändern die Randabschnitte 74 durch die Schneidkanten 98 abgetrennt werden.

Das durch die Besäumungsstation 66 bearbeitete Band 20 hat nun die in Fig. 6 gezeigte Querschnittsform. Nach dem Durchlaufen der Besäumungsstation 66 wird es an der Führungsrolle 64 weitergeführt. Hierbei liegen wiederum die Randbereiche 32 an den Innenflächen 86 der Stufen 82 an der Umfangsfläche der Führungsrolle 64 auf beiden Seiten an, so daß sich eine gute Seitenführung ergibt.

Bevor das Metallband 20 die Formungs- und Besäumungsvorrichtung 22 verläßt, durchläuft es noch die in Fig. 4 dargestellte Andrückstation 76. An der Andrückstation 76 ist eine Achse 100 parallel zur Drehachse der Führungsrolle 64 neben deren Umfangsfläche angeordnet. Auf der Achse 100 ist eine Halterolle 102 drehbar gelagert, die das Metallband 20 gegen die Führungsrolle 64 drückt. Auf der Achse 100 sind Halterungen 104 angeordnet, in denen Andrückrollen 78 drehbar gelagert sind. Die Andrückrollen 78 sind als Kegelrollen ausgebildet, die seitlich an die senkrechten Ränder 32 des Metallbandes 20 angedrückt werden. Die Andrückrollen 78 drücken diese Ränder 32 gegen die Innenflächen 86 der Stufen 82.

Durch die Aussparungen 88 und die entsprechenden kegelförmigen Rollen 78 kommt es hierbei zu einer Verbiegung der Ränder 32 des Metallbandes 20 von mehr als 90° gegenüber dem mittleren Bereich 30. Dies kompensiert das elastische Verhalten des Materials, das ein Aufrichten der Ränder 32 nach dem Durchlaufen der Andrückstation 76 bewirkt. So wird erzielt, daß die Ränder 32 nach dem Durchlaufen der Andrückstation senkrecht zu dem mittleren Bereich 30 des Metallbandes 20 verlaufen.

## Patentansprüche

1. Vorrichtung zur Herstellung eines Metallbandes mit abgewinkelten Längsrändern mit
- einer Formstation (60) mit einem Paar ineinandergreifender Formrollen zur Formung jeweils eines L-förmigen Flansches (70) an den Längsrändern des Metallbandes (56) und
- einer Besäumungsstation (66) zum Abtrennen eines Randabschnittes (74) des an den Längsseiten gebildeten Flansches (70) des Metallbandes (56), die eine Besäumungsrolle (68) mit Schneidkanten (98) und eine Gegenrolle mit entsprechenden Halteelementen (82) aufweist, wobei die Besäumungsrolle (68) und die Gegenrollen so nebeneinander angeordnet sind, daß die Halteelemente (82) der Gegenrolle (64) jeweils mit den Schneidkanten (98) der Besäumungsrolle (68) in Eingriff stehen,
**gekennzeichnet durch**
- eine Führungsvorrichtung (Führungsrolle 64) zum Führen des Metallbandes (56) zwischen der Formstation (60) und der Besäumungsstation (66) an einer gekrümmten Bahn.

2. Vorrichtung nach Anspruch 1, dadurch gekennzeichnet, daß die Führungsvorrichtung (Führungsrolle 64) mindestens ein Führungselement aufweist mit einer mittleren Kontaktfläche (80) zur Anlage an einen mittleren, zwischen den L-förmigen Flanschen (70) gebildeten Bereich (30) des in der Formstation (60) bearbeiteten Metallbandes (56), wobei die Breite der Kontaktfläche (80) der Breite des Bereichs (30) angepaßt ist.

3. Vorrichtung nach Anspruch 1 oder 2, dadurch gekennzeichnet, daß die Führungsvorrichtung (Führungsrolle 64) mindestens ein Paar von Führungsrollen zur Aufnahme des Metallbandes (56) zwischen den Führungsrollen aufweist.

4. Vorrichtung nach einem der vorhergehenden Ansprüche, dadurch gekennzeichnet, daß die Formstation (60) eine erste Formrolle mit Randbereichen (84) und einem dazwischen angeordneten Mittelbereich (80), wobei der Umfang des Mittelbereichs (80) größer ist als der Umfang der Randbereiche (84) und zwischen dem Mittelbereich (80) und den Randbereichen (84) jeweils eine Stufe (82) gebildet ist, und eine zweite Formrolle (62) aufweist mit Randbereichen (94) und einem dazwischen angeordneten Mittelbereich (92), wobei die Randbereiche (94) einen größeren Umfang als der Mittelbereich (92) aufweist und zwischen dem Mittelbereich (92) und den Randbereichen (94) Stufen gebildet sind.

5. Vorrichtung nach Anspruch 4, dadurch gekennzeichnet, daß die Stufen (82) der ersten Formrolle seitliche Flächen (86) aufweisen, in denen Hinterschnitte bildende Aussparungen (88) angeordnet sind.

6. Vorrichtung nach einem oder mehreren der vorhergehenden Ansprüche, dadurch gekennzeichnet, daß das Führungselement als eine Führungsrolle (64) ausgebildet ist.

7. Vorrichtung nach Anspruch 6, dadurch gekennzeichnet, daß die Führungsrolle (64) gleichzeitig eine der beiden Formrollen (64,62) der Formstation (60) und eine der beiden Rollen (64,68) der Besäumungsstation (66) ist.

8. Vorrichtung nach Anspruch 7, dadurch gekennzeichnet, daß die Führungsrolle die erste Rolle der Formstation (60) und die Gegenrolle der Besäumungsstation (66) ist.

9. Vorrichtung nach einem der Ansprüche 6 bis 8, dadurch gekennzeichnet, daß die Führungsrolle (64) auf ihrer Umfangsfläche einen mittleren Bereich (80) von größerem Umfang als in den Randbereichen (84) aufweist, wobei Stufen (80) zwischen den Randbereichen (84) und dem Mittelbereich (80) gebildet sind.

10. Vorrichtung nach einem der Ansprüche 6 bis 9, dadurch gekennzeichnet, daß die Umfangsfläche der Führungsrolle (64) im Bereich der Stufen (82) jeweils eine Einkerbung (90) aufweist.

11. Vorrichtung nach einem oder mehreren der vorhergehenden Ansprüche, dadurch gekennzeichnet, daß eine Andrückstation (76) hinter der Besäumungsstation (66) zum Andrücken des abgewinkelten Längsrandes (30) an eine Haltefläche (86) vorgesehen ist.

12. Vorrichtung nach Anspruch 11, dadurch gekennzeichnet, daß die Andrückstation (76) an einem solchen Punkt der Bahn des in der Führungsvorrichtung (Führungsrolle 64) geführten Metallbandes (20) angeordnet ist, daß das Metallband (20) hinter der Andrückstation (76) gerade geführt ist.

13. Vorrichtung nach Anspruch 11 oder 12, dadurch gekennzeichnet, daß die Andrückstation (76) seitliche Andrückrollen (78) und eine Halterolle (64) mit seitlichen Halteflächen (86) aufweist, neben denen die Andrückrollen (78) angeordnet sind.

14. Vorrichtung nach Anspruch 13, dadurch gekennzeichnet, daß die Andrückrollen (78) um Achsen drehbar sind, die im wesentlichen senkrecht auf der Ebene des Metallbandes (20) stehen.

15. Vorrichtung nach Anspruch 13 oder 14, dadurch gekennzeichnet, daß die Halterolle die Führungsrolle (64) ist und die seitlichen Halteflächen (86) die Seitenflächen (86) der in der Umfangsfläche der Führungsrollen (64) ausgebildeten Stufen (82) sind.
